# EUROPÄISCHE PATENTSCHRIFT

(11) **EP 3 127 791 B1**
(45) Veröffentlichungstag und Bekanntmachung des Hinweises auf die Patenterteilung: **04.09.2019**
(21) Anmeldenummer: 16178969.8
(22) Anmeldetag: 12.07.2016
(51) Int. Cl.: B62D 53/02, B60G 17/00, B62D 6/00, B60G 21/00, B62D 12/00

(54) **VORRICHTUNG ZUR VERBESSERUNG DER FAHRSICHERHEIT VON KNICKGELENKTEN FAHRZEUGEN**
DEVICE FOR IMPROVING THE SAFETY OF ARTICULATED VEHICLES WHEN DRIVING
DISPOSITIF D'AMELIORATION DE LA SECURITE DE CONDUITE DES VEHICULES ARTICULES

(30) Priorität: 06.08.2015 DE 102015112957
(43) Veröffentlichungstag der Anmeldung: 08.02.2017
(73) Patentinhaber: Max Holder GmbH, 72555 Metzingen (DE)
(72) Erfinder: Mayer, Christian, 72768 Reutlingen (DE); Schmid, Ulrich, 72555 Metzingen (DE)
(74) Vertreter: Kohler Schmid Möbus Patentanwälte

(56) Entgegenhaltungen:
- EP-A2- 1 468 899
- DE-A1- 2 511 446
- DE-A1- 3 028 007
- DE-U1-202006 015 828
- FR-A1- 2 652 313
- FR-A1- 2 846 930
- US-A- 5 873 431
- US-A1- 2013 277 942

## Beschreibung

Die Erfindung betrifft eine Vorrichtung zur Verbesserung der Fahrsicherheit von knickgelenkten Fahrzeugen, die mittels eines Knick-Pendelgelenks verbundene Vorderwagen und Hinterwagen aufweisen, mit den Merkmalen des Oberbegriffs des Anspruchs 1.

Insbesondere Nutzfahrzeuge sind häufig als knickgelenkte Fahrzeuge mit einem Vorder- und einem Hinterwagen ausgebildet. Ein Beispiel sind Radlader, bei denen in der Regel allerdings lediglich ein Knickgelenk zur Lenkung zwischen dem Vorder- und Hinterwagen angeordnet ist. Bodenunebenheiten werden durch eine pendelnd aufgehängte oder eine gefederte Achse am Hinterwagen ausgeglichen. Knickgelenkte Fahrzeuge, bei denen außerdem zumindest einer der Wagen um eine horizontale Pendelachse verschwenken kann, haben den Vorteil, dass sowohl der Vorder- als auch der Hinterwagen direkt über eine mit Rädern versehene Achse am Boden geführt werden, sodass sich jeder Wagen separat dem Bodenprofil anpassen kann. Auch Anbaugeräte an den Wagen werden entsprechend über die Achsen mit abgestützt, sodass sich eine hohe Standsicherheit und eine hohe Kippsicherheit während der Fahrt ergibt.

Die gewünschte Pendelbewegung kann über horizontal ausgerichtete Pendellenker oder Faustachsen oder über einen Drehkranz zwischen den Rahmen des Vorder- und Hinterwagens realisiert werden.

Da jedoch nur einer der Wagen eine Pendelbewegung ausführt, sind die Fahreigenschaften der beiden Wagen bei Kurvenfahrten und bei Bodenunebenheiten unterschiedlich. Diese Unterschiede werden noch verstärkt, wenn die Lastverteilung des Gesamtfahrzeugs durch An- und Aufbauten auf die beiden Wagen ungleich ist. Eine zu starke Pendelbewegung eines Wagens beispielsweise aufgrund eines Anbaugeräts kann zu einer ungewünschten Reduzierung der Radlast am anderen Wagen führen, sodass im Extremfall sogar ein Rad des anderen Wagens vom Boden abhebt.

Zur Vermeidung solcher für die Sicherheit des Fahrzeugs gefährlichen Radlastveränderungen ist in der DE 30 28 007 A1 vorgeschlagen worden, durch beidseitig an einem Pendellenker zwischen dem Vorder- und Hinterwagen angreifende Zylinder oder Federpakete die Pendelbewegungen bei Kurvenfahrten zu begrenzen. Eine Bodenanpassung im unbeladenen Zustand des Fahrzeugs wird nicht eingeschränkt, sodass sich das Fahrzeug bei Geradeausfahrten Bodenunebenheiten ohne jede Beschränkung anpassen kann.

Bei schneller Geradeausfahrt können Bodenunebenheiten jedoch ebenfalls zu einem sehr starken Schwingen des Fahrzeugs bzw. desjenigen Wagens, der eine Pendelbewegung ausführen kann, und zum Abheben eines Rades am Gegenwagen führen.

Aus der DE 25 11 446 A1 ist eine Vorrichtung der eingangs genannten Art bereits bekannt. Sie sorgt dafür, dass bei einem knickgelenkten Fahrzeug die maximale Last außerhalb der Fahrzeugachsen erhöht werden kann.

Der vorliegenden Erfindung liegt daher die Aufgabe zugrunde, die Fahrsicherheit von knick-pendelgelenkten Fahrzeugen weiter zu erhöhen.

Die Aufgabe wird gelöst durch eine Vorrichtung zur Verbesserung der Fahrsicherheit von knickgelenkten Fahrzeugen, mit den Merkmalen des Anspruchs 1. Insbesondere werden die Stellglieder derart beeinflusst, dass ein Abheben eines Rades des Fahrzeugs vom Boden verhindert wird.

Mit Hilfe der erfindungsgemäßen Vorrichtung werden auch bei Geradeausfahrt starke Pendelbewegungen in Abhängigkeit von den auf die Stellglieder wirkenden Kräfte und der Fahrzeuggeschwindigkeit beschränkt. Je höher die Geschwindigkeit desto kleiner sind die erlaubten Pendelausschläge, um ein Abheben eines Rades des Fahrzeugs vermeiden zu können. Dabei können die Grenzwerte auch manuell verändert werden. Sinnvoll ist jedoch, Grenzwerte für den jeweiligen Fahrzeugtyp als Standardwerte in der Ansteuereinrichtung abzuspeichern. Auch eine dynamische Anpassung der Pendelbewegungen ist möglich. Nach Überfahren einer einseitigen Bodenwelle durch die Vorderachse kann die Hinterachse durch aktive Ansteuerung der Stellglieder voreilend in die Gegenrichtung bewegt werden.

Die Sensoreinrichtungen erfassen auch Pendelbewegungen aufgrund von Kurvenfahrten und verhindern ein Abheben des kurvenäußeren Rades. Mit den Sensoreinrichtungen sind auch plötzliche Bremsmanöver erfassbar, die ebenfalls zu einem Aufschaukeln des Fahrzeugs führen können. Auch in einem solchen Fall werden die Pendelbewegungen beschränkt. Bei Geradeausfahrten in moderater Geschwindigkeit werden die Pendelbewegungen für eine gute Bodenanpassung des Fahrzeugs dagegen nicht beschränkt.

Die Sensoreinrichtungen können dabei vorzugsweise Drucksensoren sein. Denkbar ist jedoch auch die Verwendung von Kraft oder Wegesensoren.

Vorzugsweise können mit der Ansteuereinrichtung die Stellglieder aktivierbar sein, wenn die Sensoreinrichtungen einen erhöhten Druck auf die Stellglieder detektieren und/oder die Geschwindigkeit des Fahrzeugs zunimmt. Die Stellglieder sind dann bei langsamer Fahrt und/oder bei geringen Pendelbewegungen inaktiv. Es ist jedoch auch möglich, die Stellglieder ständig aktiv zu halten und sogar den Pendellenker, die Faustachse oder den Drehkranz in einer Richtung über eine Nulllage hinaus vorzuspannen, wenn das Fahrzeug in Ruhe ist. Dies kann vorteilhaft sein, wenn die Lastverteilung auf die Räder an einem oder an beiden Wagen sehr unterschiedlich ist.

Weitere Vorteile ergeben sich, wenn zusätzlich Sensoreinrichtungen zur Erfassung der Radlasten des Vorder- und des Hinterwagens und des Lenkwinkels zwischen Vorder- und Hinterwagen vorgesehen sind, die mit der Auswerte- und Regeleinheit verbunden sind, und die Ansteuereinrichtung die Stellglieder derart ansteuert, dass diese die Pendelbewegungen zwischen dem Vorder- und Hinterwagen in Abhängigkeit vom Lenkwinkel und dem Verhältnis der Radlasten bei Geradeausfahrt begrenzen, wenn die Radlasten zwischen kurveninnerem Rad und kurvenäußerem Rad des Vorder- und/oder Hinterwagens einen vorgebbaren Differenzwert überschreiten. Diese zusätzlichen Sensoreinrichtungen erfassen ungleiche Radlasten an den Wagen automatisch, sodass beispielsweise nach einem Austausch der Anbaugeräte am Fahrzeug keine manuelle Neuprogrammierung der Ansteuereinrichtung für die Stellglieder notwendig ist.

Die Ansteuereinrichtung kann dabei die Stellglieder auch so ansteuern, dass der Pendellenker, die Faustachse oder der Drehkranz bei Geradeausfahrt vorgespannt ist, wenn die Radlasten zwischen dem linken und dem rechen Rad des Vorder- und/oder Hinterwagens eine über einem vorgebbaren Grenzwert liegende Differenz aufweisen. Insbesondere bei ausragenden Anbaugeräten können stark unterschiedliche Radlasten auftreten, die die Fahrsicherheit bereits bei Geradeausfahrt auf leicht unebenem Gelände gefährden. Dem kann durch die Vorspannung des Pendellenkers entgegengewirkt werden.

Weiter kann die Vorrichtung Sensoreinrichtungen zur Erfassung der Neigung des Vorder- und des Hinterwagens bezüglich der Horizontalen aufweisen und die Auswerte- und Regeleinheit bei der Ansteuerung der Stellglieder diesen Messwert mit einbeziehen. Sie kann außerdem Sensoreinrichtungen zur Erfassung des Schwerpunkts des Vorder- und/oder des Hinterwagens aufweisen. Neigungsänderungen und Schwerpunktverschiebungen, die beispielsweise durch einen schwappenden Tankinhalt bei Straßenreinigungsfahrzeugen auftreten können, beeinträchtigen ebenfalls die Fahrsicherheit. Auch diese Einflüsse können zumindest teilweise durch eine entsprechende Ansteuerung der Stellglieder kompensiert werden.

Vorzugsweise kann die Vorrichtung auch Einrichtungen zur Erkennung von An- oder Aufbauaggregaten am Vorder- oder Hinterwagen aufweisen. Diese bestimmen unsymmetrische Lastverteilungen zwischen dem Vorder- und Hinterwagen in hohem Maße. Sind diese Geräte bekannt, können Pendelbewegungen erforderlichenfalls von vorneherein begrenzt werden.

Neben den Begrenzungen von Pendelbewegungen zwischen dem Vorder- und Hinterwagen können selbstverständlich weitere Maßnahmen zur Erhöhung der Fahrsicherheit ergriffen werden. So kann beispielsweise die Auswerte- und Regeleinheit mit Einrichtungen zur Geschwindigkeitsregulierung des Fahrzeugs verbunden sein. Damit lässt sich insbesondere die Höchstgeschwindigkeit den Gegebenheiten anpassen. Selbstverständlich lässt sich die Höchstgeschwindigkeit auch dem Fahrer anpassen. Bei weniger geübten Fahrern kann diese entsprechend reduziert werden.

Weiter kann die Auswerte- und Regeleinheit mit Einrichtungen zur Versteifung der Federung des Vorder- und/oder Hinterwagens verbunden sein. Auch dadurch kann ein zu starkes Schwingen der Wagen verhindert werden.

Sofern das Fahrzeug über Einrichtungen zum Neigungsausgleich am Vorder- und/oder Hinterwagen ausgerüstet ist, kann die Auswerte- und Regeleinheit auch mit diesen Einrichtungen verbunden sein.

Bei einer Vorrichtung für ein Fahrzeug mit einem Pendellenker, der von zwei miteinander in Längsrichtung gekoppelten Lenkerhälften gebildet ist, kann die Auswerte- und Regeleinheit vorzugsweise jeweils zwei an jeder Pendellenkerhälfte angreifende Stellglieder ansteuern. Dabei können beide Pendellenkerhälften Pendelbewegungen zulassen. Es ist jedoch auch möglich, dass die Auswerte- und Regeleinheit in Abhängigkeit von den Radlasten am Vorder- und Hinterwagen und dem Lenkwinkel eine Lenkerhälfte durch gleichzeitige Ansteuerung beider Stellglieder dieser Lenkerhälfte still setzt. Je nach der Lastverteilung zwischen Vorder- und Hinterwagen kann ausgewählt werden, welche Lenkerhälfte die aktive ist, d.h. welcher Wagen Pendelbewegungen ausführen kann.

Bei allen Ausführungsformen des Knick-Pendelgelenks kommen in erster Linie Zylinder oder elektromechanische Aktoren als Stellglieder in Frage.

Im Folgenden wird die Erfindung anhand von bevorzugten Ausführungsbeispielen von Pendelgelenken näher erläutert.

Es zeigen:
- Fig. 1a, b: zwei Ansichten eines knick-pendelgelenkten Fahrzeugs mit durch einen Pendellenker verbundenen Vorder- und Hinterwagen;
- Fig. 2: ein Prinzipschaltbild einer ersten erfindungsgemäßen Vorrichtung;
- Fig. 3: ein Prinzipschaltbild einer zweiten erfindungsgemäßen Vorrichtung;
- Fig. 4: ein Prinzipschaltbild einer dritten erfindungsgemäßen Vorrichtung.

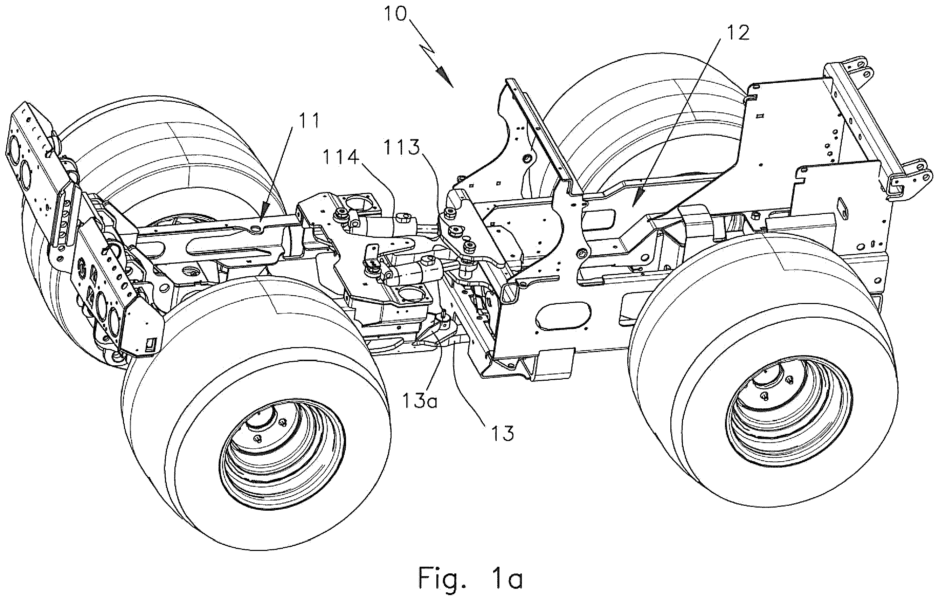

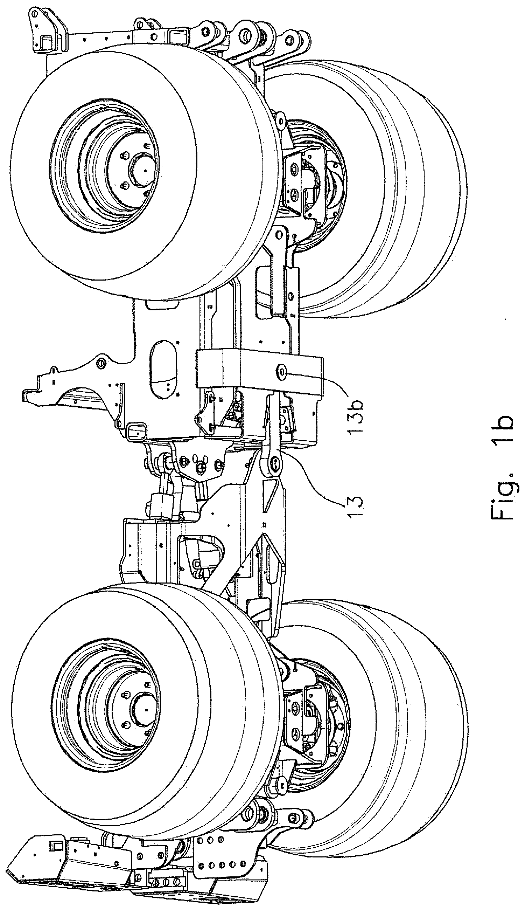

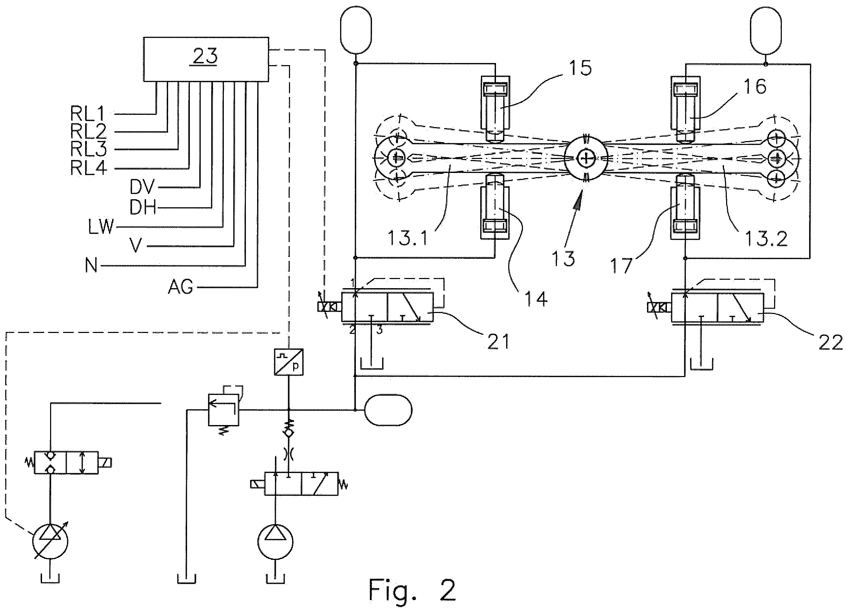

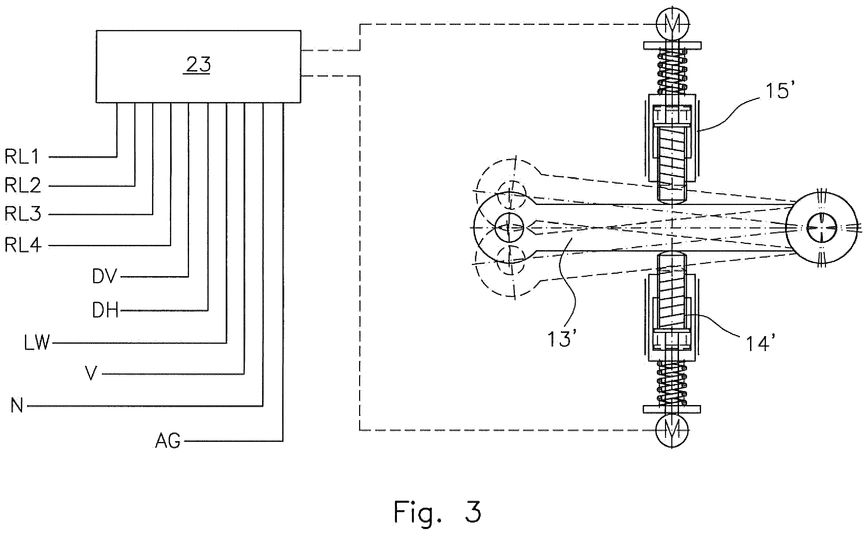

Fig. 1a zeigt ein knick-pendelgelenktes Fahrzeug 10 mit einem Vorderwagen 11 und einem Hinterwagen 12, die durch einen Pendellenker 13 miteinander verbunden sind, der an einem vorderen Pendellager 13a am Vorderwagen 11 angelenkt ist. Das hintere Pendellager 13b ist aus Fig. 1b ersichtlich. Außerdem ist ein Knickgelenk 113 zwischen dem Vorderwagen 11 und dem Hinterwagen 12 vorhanden, das mit Hilfe von Lenkzylindern 114 die Lenkung des Fahrzeugs 10 erlaubt. Der Pendellenker 13 ermöglicht ein gegenseitiges Verwinden des Vorder- und Hinterwagens 11, 12 um eine horizontale, sich in Fahrzeuglängsrichtung erstreckende Achse. Um bei ungünstigen Lastverteilungen zwischen dem Vorder- und Hinterwagen 11, 12 und/oder starken Lenkeinschlägen oder starken Bodenunebenheiten die Fahrsicherheit des Fahrzeugs 10 zu erhöhen, greifen am Pendellenker 13 beidseitig Stellglieder an, die die Pendelbewegungen begrenzen oder diesen entgegenwirken können, wie die Figuren 2 bis 4 verdeutlichen.

Figur 2 zeigt einen aus zwei Lenkerhälften 13.1, 13.2 gebildeten Pendellenker 13, wobei die Lenkerhälften 13.1, 13.2 gelenkig miteinander verbunden sind.

In Fig. 2 ist eine Vorrichtung gezeigt, bei der als Zylinder ausgebildeten Stellglieder 14, 15 der einen Lenkerhälfte 13.1 und als Zylinder ausgebildete Stellglieder 15, 16 der zweiten Lenkerhälfte 13.2 jeweils über ein separates Druckregelventil 21, 22 angesteuert werden. Die Ventile 21, 22 werden von einer Ansteuer- und Regeleinheit 23 gesteuert. Die Ansteuer- und Regeleinheit wertet dazu Sensorsignale der vier Radlasten RL1 bis RL4 des Fahrzeugs, die Druckbeaufschlagung DV und DH der vorderen und hinteren Stellglieder 14, 15; 16, 17 durch die jeweilige Lenkerhälfte 13.1 und 13.2, den Lenkwinkel LW, die Fahrzeuggeschwindigkeit V und die Fahrzeugneigung N aus. Außerdem erhält die Ansteuer- und Regeleinheit 23 eine Anbaugerätekennung AG von eventuell am Vorder- und/oder Hinterwagen montierten Auf- oder Anbaugeräten. Die Ansteuerung der Stellglieder 14, 15; 16, 17 erfolgt dabei derart, dass die Fahrsicherheit gefährdende Pendelbewegungen vermieden werden, indem die Ausschläge der Lenkerhälften 13.1 und 13.2 begrenzt werden. Es kann auch zumindest eine der Lenkerhälften 13.1, 13.2 vollständig inaktiv geschaltet werden.

In Fig, 3 ist eine Vorrichtung zur Ansteuerung von Stellgliedern 14', 15' eines einteiligen Pendellenkers 13' gezeigt, wobei hier die Stellglieder 14', 15' elektromechanische Aktoren mit Federpaketen sind. Die Ansteuer- und Regeleinheit 23' erhält die gleichen Signale wie die Ansteuer- und Regeleinheit 23 in Fig. 2 und zusätzlich entweder Positionsinformationen der Aktoren 14', 15' oder Informationen über die auf sie wirkenden Kräfte.

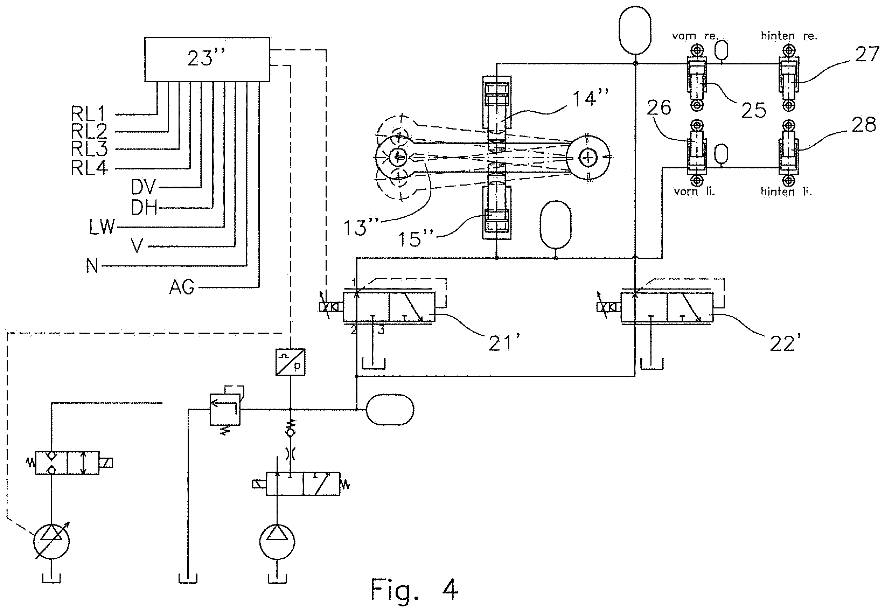

Die in Fig. 4 gezeigte Vorrichtung zur Steuerung der Pendelbewegungen eines einteiligen Pendellenkers 13" dient auch der Steuerung der Federungen 25, 26 der Räder des Vorderwagens 11 und der Federungen 27, 28 der Räder des Hinterwagens 12. Die von einer Ansteuer- und Regeleinheit 23" gesteuerten Druckventile 21' und 22' zur Ansteuerung der wieder als Zylinder ausgeführten Stellglieder 14" und 15" des Pendellenkers 13" steuern gleichsinnig auch die Federungen 25 bis 28, wobei das Druckventil 21' mit dem linken Stellglied 15" und den Federungen 26, 28 der linken Räder und das Druckventil 22' mit dem rechten Stellglied 14"und den Federungen 25, 27 der rechten Räder des Fahrzeugs verbunden ist. Die Zylinder 14", 15" können dabei auch so angesteuert werden, dass der Pendellenker 13" über seine Nulllage hinaus vorgespannt werden kann,

## Patentansprüche

1. Vorrichtung zur Verbesserung der Fahrsicherheit von knickgelenkten Fahrzeugen (10), die mittels eines Knick-Pendelgelenks verbundene Vorderwagen (11) und Hinterwagen (12) aufweisen, mit Einrichtungen (21, 22, 21', 22') zur Ansteuerung von Stellgliedern (14, 15, 16, 17; 14', 15'; 14", 15"), die auf das Knick-Pendelgelenk zur Begrenzung der Pendelbewegung zwischen dem Vorder- und Hinterwagen (11, 12) einwirken, wobei an den Stellgliedern (14, 15, 16, 17; 14', 15'; 14", 15") Sensoreinrichtungen zur Erfassung der auf sie einwirkenden Kräfte (DV, DH) angeordnet sind, sowie mit einer Auswerte- und Regeleinheit (23, 23', 23") für die Signale der Sensoreinrichtungen, die mit den Einrichtungen zur Ansteuerung (21, 22, 21', 22') der Stellglieder (14, 15, 16, 17; 14', 15'; 14", 15") verbunden ist und diese derart ansteuert, dass diese die Pendelbewegungen zwischen dem Vorder- und Hinterwagen (11, 12) in Abhängigkeit der auf die Stellglieder (14, 15, 16, 17; 14', 15'; 14", 15") wirkenden Kräfte (DV, DH) auf ein vorgebbares Maß regelt, **dadurch gekennzeichnet, dass** die Auswerte- und Regeleinheit (23, 23', 23") die Einrichtungen zur Ansteuerung (21, 22, 21', 22') der Stellglieder (14, 15, 16, 17; 14', 15'; 14", 15") derart ansteuert, dass diese die Pendelbewegungen auch in Abhängigkeit der Geschwindigkeit (V) des Fahrzeugs (10) auf ein vorgebbares Maß regeln.

2. Vorrichtung nach Anspruch 1, **dadurch gekennzeichnet, dass** die Sensoreinrichtungen Drucksensoren aufweisen.

3. Vorrichtung nach Anspruch 1 oder 2, **dadurch gekennzeichnet, dass** mit der Ansteuereinrichtung (21, 22, 21', 22') die Stellglieder (14, 15, 16, 17; 14', 15'; 14", 15") aktivierbar sind, wenn die Sensoreinrichtungen einen erhöhten Druck auf die Stellglieder (14, 15, 16, 17; 14', 15'; 14", 15") detektieren und/oder die Geschwindigkeit (V) des Fahrzeugs zunimmt.

4. Vorrichtung nach einem der vorhergehenden Ansprüche, **dadurch gekennzeichnet, dass** Sensoreinrichtungen zur Erfassung der Radlasten (RL1 - RL4) des Vorder- und des Hinterwagens (11, 12) und des Lenkwinkels (LW) zwischen Vorder- und Hinterwagen(11, 12) vorgesehen sind, die mit der Auswerte- und Regeleinheit (23, 23', 23") verbunden sind, und die Ansteuereinrichtung (21, 22, 21', 22') die Stellglieder (14, 15, 16, 17; 14', 15'; 14", 15") derart ansteuert, dass diese die Pendelbewegungen zwischen dem Vorder- und Hinterwagen (11, 12) in Abhängigkeit vom Lenkwinkel (LW) und dem Verhältnis der Radlasten (RL1 bis RL4) bei Geradeausfahrt begrenzen, wenn die Radlasten (RL1 bis RL4) zwischen kurveninnerem Rad und kurvenäußerem Rad des Vorder- und/oder Hinterwagens (11, 12) einen vorgebbaren Differenzwert überschreiten.

5. Vorrichtung nach Anspruch 4, **dadurch gekennzeichnet, dass** die Ansteuereinrichtung (23, 23', 23") die Stellglieder (14, 15, 16, 17; 14', 15'; 14", 15") so ansteuert, dass ein Pendellenker (13, 13', 13") bei Geradeausfahrt vorgespannt ist, wenn die Radlasten (RL1 bis RL4) zwischen dem linken und dem rechen Rad des Vorder- und/oder Hinterwagens (11, 12) eine über einem vorgebbaren Grenzwert liegende Differenz aufweisen.

6. Vorrichtung nach einem der vorhergehenden Ansprüche, **dadurch gekennzeichnet, dass** sie außerdem Sensoreinrichtungen zur Erfassung der Neigung (N) des Vorder- und des Hinterwagens (11, 12) bezüglich der Horizontalen aufweist und die Auswerte- und Regeleinheit (23, 23', 23") bei der Ansteuerung der Stellglieder (14, 15, 16, 17; 14', 15'; 14", 15") diesen Messwert mit einbezieht.

7. Vorrichtung nach einem der vorhergehenden Ansprüche, **dadurch gekennzeichnet, dass** sie außerdem Sensoreinrichtungen zur Erfassung des Schwerpunkts des Vorder- und/oder des Hinterwagens (11, 12) aufweist.

8. Vorrichtung nach einem der vorhergehenden Ansprüche, **dadurch gekennzeichnet, dass** sie Einrichtungen zur Erkennung von An- oder Aufbauaggregaten (AG) am Vorder- und/oder Hinterwagen (11, 12) aufweist.

9. Vorrichtung nach einem der vorhergehenden Ansprüche, **dadurch gekennzeichnet, dass** die Auswerte- und Regeleinheit (23, 23', 23") mit Einrichtungen zur Geschwindigkeitsregulierung des Fahrzeugs (10) verbunden ist.

10. Vorrichtung nach einem der vorhergehenden Ansprüche, **dadurch gekennzeichnet, dass** die Auswerte- und Regeleinheit (23, 23', 23") mit Einrichtungen zur Versteifung der Federung (25, 26, 27, 28) des Vorder- und/oder Hinterwagens (11, 12) verbunden ist.

11. Vorrichtung nach einem der vorhergehenden Ansprüche, **dadurch gekennzeichnet, dass** die Auswerte- und Regeleinheit (23, 23', 23") mit Einrichtungen zum Neigungsausgleich am Vorder- und/oder Hinterwagen (11, 12) verbunden ist.

12. Vorrichtung nach einem der vorhergehenden Ansprüche für ein Fahrzeug (10) mit einem Pendellenker (13), der von zwei miteinander in Längsrichtung gekoppelten Lenkerhälften (13.1, 13.2) gebildet ist, **dadurch gekennzeichnet, dass** die Auswerte- und Regeleinheit (23, 23', 23") jeweils zwei an jeder Pendellenkerhälfte (13.1, 13.2) angreifende Stellglieder (14, 15, 16, 17) ansteuert.

13. Vorrichtung nach Anspruch 12 **dadurch gekennzeichnet, dass** die Auswerte- und Regeleinheit (23) in Abhängigkeit von den Radlasten (RL1 bis RL4) am Vorder- und Hinterwagen (11, 12) und dem Lenkwinkel (LW) eine Lenkerhälfte (13.1, 13.2) durch gleichzeitige Ansteuerung beider Stellglieder (14, 15, 16, 17) dieser Lenkerhälfte (13.1, 13.2) still setzt.

14. Vorrichtung nach einem der vorhergehenden Ansprüche, **dadurch gekennzeichnet, dass** die Stellglieder (14, 15, 16, 17; 14', 15'; 14", 15") Zylinder oder elektromechanische Aktoren sind.

## Claims

1. Device for improving the road safety of articulated vehicles (10), which have front carriages (11) and rear carriages (12) connected by means of an articulated swivel joint, with devices (21, 22, 21', 22') for controlling actuators (14, 15, 16, 17; 14', 15'; 14", 15"), which act on the articulated swivel joint to limit the swivel movement between the front and rear carriages (11, 12), in which sensor devices for detecting the forces (DV, DH) acting on them are arranged on the actuators (14, 15, 16, 17; 14', 15'; 14", 15"), and with an evaluation and control unit (23, 23', 23") for the signals of the sensor devices, which is connected to the devices for controlling (21, 22, 21', 22') the acutators (14, 15, 16, 17; 14', 15'; 14", 15") and controls them in such a way that they control the swivel movements between the front and rear carriages (11, 12), depending on the forces (DV, DH) acting on the actuators (14, 15, 16, 17; 14', 15'; 14", 15"), to an extent that may be predetermined, **characterised in that** the evaluation and control unit (23, 23', 23") controls the devices for controlling (21, 22, 21', 22') the actuators (14, 15, 16, 17; 14', 15'; 14", 15") in such a way that they control the swivel movements also depending on the speed (V) of the vehicle (10) to an extent that may be predetermined.

2. Device according to claim 1, **characterised in that** the sensor devices have pressure sensors.

3. Device according to claim 1 or 2, **characterised in that** the actuators (14, 15, 16, 17; 14', 15'; 14", 15") may be activated with the control device (21, 22, 21', 22'), if the sensor devices detect an increased pressure on the actuators (14, 15, 16, 17; 14', 15'; 14", 15") and/or the speed (V) of the vehicle increases.

4. Device according to one of the previous claims, **characterised in that** sensor devices for detecting the wheel loads (RL1 - RL4) of the front and rear carriage (11, 12) and the steering angle (LW) between the front and rear carriages (11, 12) are provided, which are connected to the evaluation and control unit (23, 23', 23"), and the control device (21, 22, 21', 22') controls the actuators (14, 15, 16, 17; 14', 15'; 14", 15") in such a way that they limit the swivel movements between the front and rear carriage (11, 12), depending on the steering angle (LW) and the ratio of the wheel loads (RL1 to RL4), when driving straight ahead, if the wheel loads (RL1 to RL4) exceed a differential value that may be predetermined between the inside wheel and the outside wheel of the front and/or rear carriage (11, 12).

5. Device according to claim 4, **characterised in that** the control device (23, 23', 23") controls the actuators (14, 15, 16, 17; 14', 15'; 14", 15") so that a swivel guide rod (13, 13', 13") is preloaded when driving straight forward, if the wheel loads (RL1 to RL4) between the left and right wheel of the front and/or rear carriage (11, 12) have a difference that is above a limit value that may be predetermined.

6. Device according to one of the previous claims, **characterised in that** it also has sensor devices for detecting the inclination (N) of the front and rear carriage (11, 12) with reference to the horizontal and the evaluation and control unit (23, 23', 23") includes this measured value when controlling the actuators (14, 15, 16, 17; 14', 15'; 14", 15").

7. Device according to one of the previous claims, characterisd in that it also has sensor devices for detecting the centre of gravity of the front and/or rear carriage (11, 12).

8. Device according to one of the previous claims, **characterised in that** it has devices for recognising additional units (AG) on the front and/or rear carriage (11, 12).

9. Device according to one of the previous claims, **characterised in that** the evaluation and control unit (23, 23', 23") is connected to devices for controlling the speed of the vehicle (10).

10. Device according to one of the previous claims, **characterised in that** the evaluation and control unit (23, 23', 23") is connected to devices for stiffening the suspension (25, 26, 27, 28) of the front and/or rear carriage (11, 12).

11. Device according to one of the previous claims, **characterised in that** the evaluation and control unit (23, 23', 23") is connected to devices for adjusting the inclination on the front and/or rear carriage (11, 12).

12. Device according to one of the previous claims for a vehicle (10) with a swivel guide rod (13), which is made of two guide rod halves (13.1, 13.2) connected to each other in the longitudinal direction, **characterised in that** the evaluation and control unit (23, 23', 23") controls two actuators (14, 15, 16, 17) affecting on each swivel guide rod half (13.1, 13.2).

13. Device according to claim 12, **characterised in that**, depending on the wheel loads (RL1 to RL4) on the front and rear carriage (11, 12) and the steering angle (LW), the evaluation and control unit (23) stops a guide rod half (13.1, 13.2) by controlling both actuators (14, 15, 16, 17) of this guide rod half (13.1, 13.2) at the same time.

14. Device according to one of the previous claims, **characterised in that** the actuators (14, 15, 16, 17; 14', 15'; 14", 15") are cylinders or electromechanical actuators.

## Revendications

1. Dispositif destiné à améliorer la sécurité de conduite de véhicules articulés (10) présentant un train avant (11) et un train arrière (12) reliés au moyen d'une articulation pendulaire, avec des appareils (21, 22, 21', 22') destinés à commander des actionneurs (14, 15, 16, 17 ; 14', 15' ; 14", 15") agissant sur l'articulation pendulaire articulée afin de limiter le mouvement pendulaire entre les trains avant et arrière (11, 12), dans lequel des capteurs sont agencés au niveau des actionneurs (14, 15, 16, 17 ; 14', 15' ; 14", 15") afin de détecter les forces (DV, DH) agissant sur ceux-ci, ainsi qu'avec une unité d'évaluation et de régulation (23, 23', 23") destinée aux signaux des capteurs, reliée aux appareils (21, 22, 21', 22') destinés à commander les actionneurs (14, 15, 16, 17 ; 14', 15' ; 14", 15") et commandant ceux-ci de telle manière qu'ils régulent dans une mesure pouvant être prédéfinie les mouvements pendulaires entre les trains avant et arrière (11, 12) en fonction des forces (DV, DH) agissant sur les actionneurs (14, 15, 16, 17 ; 14', 15' ; 14", 15"), **caractérisé en ce que** l'unité d'évaluation et de régulation (23, 23', 23") commande les appareils (21, 22, 21', 22') destinés à commander les actionneurs (14, 15, 16, 17 ; 14', 15' ; 14", 15") de telle manière qu'ils régulent dans une mesure pouvant être prédéfinie les mouvements pendulaires également en fonction de la vitesse (V) du véhicule (10).

2. Dispositif selon la revendication 1, **caractérisé en ce que** les capteurs présentent des capteurs de pression.

3. Dispositif selon la revendication 1 ou 2, **caractérisé en ce que** les actionneurs (14, 15, 16, 17 ; 14', 15' ; 14", 14", 15") peuvent être activés par l'appareil de commande (21, 22, 21', 22') lorsque les capteurs détectent une augmentation de pression sur les actionneurs (14, 15, 16, 17 ; 14', 15' ; 14", 15") et/ou lorsque la vitesse (V) du véhicule augmente.

4. Dispositif selon l'une quelconque des revendications précédentes, **caractérisé en ce que** des capteurs reliés à l'unité d'évaluation et de régulation (23, 23', 23") destinés à détecter les charges sur roue (RL1-RL4) des trains avant et arrière (11, 12) et l'angle de braquage (LW) entre les trains avant et arrière (11, 12) sont prévus, et l'appareil de commande (21, 22, 21', 22') commande les actionneurs (14, 15, 16, 17 ; 14', 15' ; 14", 15") de telle manière qu'ils limitent les mouvements pendulaires entre les trains avant et arrière (11, 12) en fonction de l'angle de braquage (LW) et du rapport des charges sur roue (RL1 à RL4) lors d'une conduite en ligne droite, lorsque les charges sur roue (RL1 à RL4) entre une roue située à l'intérieur de la courbe et une roue située à l'extérieur de la courbe, au sein du train avant et/ou du train arrière (11, 12), dépasse une valeur de différence pouvant être prédéfinie.

5. Dispositif selon la revendication 4, **caractérisé en ce que** l'appareil de commande (23, 23', 23") commande les actionneurs (14, 15, 16, 17 ; 14', 15' ; 14", 15") de sorte qu'un bras pendulaire (13, 13', 13") est précontraint lors de la conduite en ligne droite, lorsque les charges sur roue (RL1 à RL4) entre la roue gauche et la roue droite des trains avant et/ou arrière (11, 12) présentent une différence dépassant une valeur limite pouvant être prédéfinie.

6. Dispositif selon l'une quelconque des revendications précédentes, **caractérisé en ce qu'**il présente en outre des capteurs destinés à détecter l'inclinaison (N) des trains avant et arrière (11, 12) par rapport à l'horizontale, et l'unité d'évaluation et de régulation (23, 23', 23") prend en compte ladite valeur mesurée lors de la commande des actionneurs (14, 15, 16, 17 ; 14', 15' ; 14", 15").

7. Dispositif selon l'une quelconque des revendications précédentes, **caractérisé en ce qu'**il présente en outre des capteurs destinés à détecter le centre de gravité des trains avant et/ou arrière (11, 12).

8. Dispositif selon l'une quelconque des revendications précédentes, **caractérisé en ce qu'**il présente des appareils destinés à identifier des ensembles structurels ou rapportés (AG) au niveau des trains avant et/ou arrière (11, 12).

9. Dispositif selon l'une quelconque des revendications précédentes, **caractérisé en ce que** l'unité d'évaluation et de régulation (23, 23', 23") est reliée à des appareils destinés à réguler la vitesse du véhicule (10).

10. Dispositif selon l'une quelconque des revendications précédentes, **caractérisé en ce que** l'unité d'évaluation et de régulation (23, 23', 23") est reliée à des appareils destinés à rigidifier la suspension (25, 26, 27, 28) des trains avant et/ou arrière (11, 12).

11. Dispositif selon l'une quelconque des revendications précédentes, **caractérisé en ce que** l'unité d'évaluation et de régulation (23, 23', 23") est reliée à des appareils destinés à compenser l'inclinaison au niveau des trains avant et/ou arrière (11, 12).

12. Dispositif selon l'une quelconque des revendications précédentes, destiné à un véhicule (10) muni d'un bras pendulaire (13) formé de deux moitiés de bras (13.1, 13.2) couplées l'une à l'autre dans le sens longitudinal, **caractérisé en ce que** l'unité d'évaluation et de régulation (23, 23', 23") commande respectivement deux actionneurs (14, 15, 16, 17) agissant au niveau de chaque moitié de bras pendulaire (13.1, 13.2).

13. Dispositif selon la revendication 12, **caractérisé en ce que** l'unité d'évaluation et de régulation (23) immobilise une moitié de bras (13.1, 13.2) en fonction des charges sur roue (RL1 à RL4) au niveau des trains avant et arrière (11, 12) et de l'angle de braquage (LW) via une commande simultanée des deux actionneurs (14, 15, 16, 17) de ladite moitié de bras (13.1, 13.2).

14. Dispositif selon l'une quelconque des revendications précédentes, **caractérisé en ce que** les actionneurs (14, 15, 16, 17 ; 14', 15' ; 14", 15") sont des vérins ou des capteurs électromécaniques.
